# EUROPÄISCHE PATENTSCHRIFT

(11) **EP 2 353 842 B1**
(45) Veröffentlichungstag und Bekanntmachung des Hinweises auf die Patenterteilung: **15.05.2019**
(21) Anmeldenummer: 11152169.6
(22) Anmeldetag: 26.01.2011
(51) Int. Cl.: B29C 49/42, B29C 49/78, B29C 49/12, B29C 49/06, B29C 49/36

(54) **STRECKBLASMASCHINE UND STRECKBLASVERFAHREN MIT GEGENDRUCKKOMPENSATION**
STRETCH BLOW MOLDING MACHINE AND STRETCH BLOW MOLDING METHOD WITH COUNTER PRESSURE COMPENSATION.
MACHINE D'ÉTIRAGE-SOUFFLAGE ET PROCÉDÉ D'ÉTIRAGE-SOUFFLAGE AVEC COMPENSATION DE CONTRE-PRESSION

(30) Priorität: 29.01.2010 DE 102010006318
(43) Veröffentlichungstag der Anmeldung: 10.08.2011
(73) Patentinhaber: Krones AG, 93073 Neutraubling (DE)
(72) Erfinder: Finger, Dieter, 93073 Neutraubling (DE); Schneider, Helmut, 93055 Regensburg (DE); Davidson, Hartmut, 93197 Zeitlarn (DE)
(74) Vertreter: Bittner, Bernhard

(56) Entgegenhaltungen:
- WO-A2-2006/108380
- WO-A2-2008/098565
- WO-A2-2009/144664

## Beschreibung

Die vorliegende Erfindung bezieht sich auf eine Vorrichtung zum Umformen von Kunststoffvorformlingen zu Kunststoffbehältnissen und insbesondere auf eine Streckblasmaschine. Im Stand der Technik ist es allgemein bekannt, Behälter durch Blasformen herzustellen, wobei zunächst thermoplastische Vorformlinge z. B. aus Polyethylenterephthalat (PET) in einer Heizstation aufgeheizt werden, so dass sie anschließend in einer Blasform durch Blasformung bzw. durch Streckblasen verformt werden können um so eine gewünschte Behälterform zu schaffen.

Dabei werden in der Heizstation die Vorformlinge z. B. auf einer Gliederkette mit Aufnahmedornen befördert. Die erwärmten Vorformlinge werden dann mithilfe einer Übergabevorrichtung einem Blasrad zugeführt, auf dem sich am Umfang verteilt mehrere Blasformen befinden. Die Blasformen weisen dabei zwei auseinanderklappbare Formhälften und einen Formboden auf, in welchen Aussparungen, die der Form des herzustellenden Behältnisses entsprechen, ausgebildet sind.

Nachdem ein Vorformling der aufgeklappten Blasform zugeführt worden ist, wird die aufgeklappte Blasform geschlossen und der Behälter wird durch Blasformen bzw. durch Streckblasen erzeugt. Die Blasform öffnet sich dann aufs Neue und der fertige Behälter gelangt über einen Auslaufstern zur Behälterausgabe.

Zusätzlich wird bei diesen Prozessen üblicherweise eine Reckstange verwendet, um den Kunststoffvorformling in dessen Längsrichtung zu dehnen.

Aus der WO 2009/144664 A2 ist bereits eine Vorrichtung entsprechend dem Oberbegriff des Anspruchs 1, sowie ein Verfahren entsprechend dem Oberbegriff des Anspruchs 7 bekannt. Die WO 2009/144664 A2 zeigt eine Anlage zum Blasformen von Kunststoffbehältern aus jeweiligen Vorformlingen, umfassend eine Vielzahl von Formeinheiten, die jeweils eine Form zum Blasformen mindestens eines Behälters und mindestens eine Streckstange aufweisen, die sich unter der Wirkung einer Antriebseinrichtung so bewegt, dass sie einen jeweiligen Vorformling axial verformt; die Antriebseinrichtung umfasst für jede Formeinheit einen mit den Streckstangen der Formeinheit selbst gekoppelten Antriebsmotor.

Die WO2006/108380 A2 zeigt ein Verfahren zur Positionierung eines Bauelementes, bei dem ein Fluidantrieb das Bauelement entlang einer Führung bewegt, wobei das Bauelement zusätzlich von einem elektrischen Linearantrieb positioniert wird.

Vor allem bei getakteten Linearblasmaschinen d. h. insbesondere solchen Vorrichtungen, welche die Vorformlinge bzw. Behältnisse nicht kontinuierlich sondern getaktet fördern, ist es bekannt, den Streckvorgang nicht mehr mittels eines pneumatischen Reckzylinders durchzuführen sondern mithilfe eines elektrischen Antriebsmotors. Während diesem Streckvorgang muss das Recksystem nicht nur die Kraft für die Dehnung des Kunststoffvorformlings aufbringen sondern zusätzlich die Kraft überwinden, die aufgrund des Blasdrucks im Inneren des Behälters auf die Spitze der Reckstange einwirkt. Bei einem abgeschlossenen Streckvorgang führt die Reckstange keine Bewegung mehr aus, die abgegebene mechanische Leistung ist damit gleich null. Da der Elektromotor jedoch weiterhin eine Kraft aufbringen muss, um trotz Druck auf die Reckstange die Position halten zu können, wird elektrische Leistung aus dem Stromversorgungsnetz aufgenommen, die komplett als Verlustleistung und damit insbesondere als Wärme verloren geht.

Entsprechend muss der Elektromotor erheblich größer dimensioniert werden, um die dauerhafte Gegenkraft kompensieren zu können. Durch diese höheren Verluste wird häufig eine zusätzliche Kühlung erforderlich. Diese zusätzlichen Maßnahmen verteuern das System und machen es auch unwirtschaftlicher. Der vorliegenden Erfindung liegt daher die Aufgabe zugrunde, derartige Streckblasmaschinen wirtschaftlicher zu gestalten.

Diese Aufgaben werden erfindungsgemäß durch die Gegenstände der unabhängigen Ansprüche erreicht. Vorteilhafte Ausführungsformen und Weiterbildungen sind Gegentand der Unteransprüche.

Eine erfindungsgemäße Vorrichtung zum Expandieren von Kunststoffvorformlingen zu Kunststoffbehältnissen weist eine Blasform auf, innerhalb derer die Kunststoffvorformlinge zu den Kunststoffbehältnissen expandierbar sind. Weiterhin ist eine Zuführeinrichtung vorgesehen, um den Kunststoffbehältnissen ein gasförmiges Medium und insbesondere Luft zu deren Expansion zuzuführen. Daneben ist eine Reckstange vorgesehen, um die Kunststoffvorformlinge entlang deren Längsrichtung zu dehnen, wobei ein Antriebsmotor in Form eines Elektromotors vorgesehen ist, der eine Vorwärtsbewegung der Reckstange in deren Längsrichtung zum Dehnen des Kunststoffvorformlings erzeugt.

Dabei weist die Vorrichtung zusätzlich zu dem Elektromotor eine Kraftkompensationseinrichtung auf, welche eine durch einen Innendruck des Gases in dem Behältnis erzeugte auf den Elektromotor bzw. die Reckstange wirkende Kraft wenigstens teilweise und wenigstens zeitweise kompensiert. Während im Stand der Technik daher der Elektromotor selbst verwendet wird, um diese Kraft in elektrische Energie umzuwandeln, beispielsweise dadurch, dass er bei der Rückwärtsbewegung der Reckstange in einen generatorischen Betrieb geht oder ein Stillstandsmoment aufbringt, wird vorgeschlagen, eine zusätzliche Kraftkompensationseinrichtung vorzusehen, welche die besagte auf den Elektromotor wirkende Kraft zumindest mindert. Unter der Vorwärtsbewegung der Reckstange wird diejenige Bewegung verstanden, welche den Kunststoffvorformling dehnt bzw. reckt. Es wird daher erfindungsgemäß vorgeschlagen, die durch den Blasdruck auf die Reckstange aufgebrachte Gegenkraft zumindest teilweise zu kompensieren, so dass der Elektromotor beim eigentlichen Reckvorgang nur noch die eigentliche Reckkraft aufbringen muss. Erfindungsgemäß wirkt die Kompensationskraft in der Richtung der Expansionsbewegung der Reckstange.

Bei einer vorteilhaften Ausführungsform ist bei einer Rückwärtsbewegung der Reckstange ein generatorischer Betrieb des Elektromotors wenigstens zeitweise verhindert und besonders bevorzugt vollständig verhindert. Auf diese Weise können die in dem generatorischen Betrieb anfallenden Wärmeentwicklungen verhindert werden. So ist es möglich, dass der Elektromotor bei der Rückwärtsbewegung ausgekoppelt wird, es wäre jedoch auch möglich, dass er zwar angetrieben wird, jedoch nicht im generatorischen Betrieb arbeitet d. h. insbesondere nicht Strom in irgendeiner Art und Weise erzeugt.

Vorzugsweise ist die Kraftkompensationseinrichtung unabhängig von dem Elektromotor.

Bei einer vorteilhaften Ausführungsform weist die Vorrichtung einen Gewindespindelantrieb oder einen Linearmotor zum Bewegen der Reckstange auf. Dabei ist es möglich, dass ein Motor die Reckstange selbst dreht und auf diese Weise gegenüber einer Gewindemutter verschiebt, es wäre jedoch auch möglich, dass der Antrieb umgekehrt eine in der Längsrichtung der Reckstange feste Gewindemutter dreht und auf diese Weise die Bewegung der Reckstange hervorruft. Es wären jedoch auch andere Antriebe wie Linearmotoren, Servo-Antriebe mit einer Bewegungsübersetzung mittels Zahnstange und Zahnrad oder Riemenübersetzungen denkbar.

So ist es beispielsweise möglich, dass eine lineare Reckbewegung durch eine Schraubenspindel erzeugt wird, welche für die gesamte Reckbewegung eine bestimmte Anzahl von Umdrehungen, beispielsweise zwischen 5 und 15, oder auch zwischen 8 und 12 Umdrehungen benötigt. Vorzugsweise ist die Vorrichtung derart ausgestaltet, dass die Energie, welche durch den Innendruck in dem Behältnis erzeugt wird, nicht verloren geht sondern zwischengespeichert wird.

Bei einer weiteren vorteilhaften Ausführungsform ist als Kraftkompensationseinrichtung eine pneumatisch arbeitende Kraftkompensationseinrichtung vorgesehen. Bei dieser Ausführungsform wäre es beispielsweise möglich, den Innendruck des Behältnisses derart umzuleiten, dass er zumindest auch in der Reckrichtung auf die Reckstange wirkt. So wäre es beispielsweise möglich, dass ein mit der Reckstange verbundener Kolben mit dem Blasdruck beaufschlagt wird. Auf diese Weise kann die Kraftkompensationseinrichtung den Innendruck innerhalb des Behältnisses zur Kraftkompensation nutzen.

Erfindungsgemäß weist die Kraftkompensationseinrichtung ein mit der Reckstange gekoppeltes Kolbenelement auf, welches sich gegenüber einer Kolbenaufnahme bewegt. So kann der oben erwähnte mit der Reckstange verbundene Kolben durch den Blasdruck beaufschlagt werden. Weiter erfindungsgemäß ist eine Verbindungsleitung vorgesehen, welche den Innenraum des Behältnisses mit einer ensprechenden Kolbenaufnahme verbindet, so dass der Blasdruck im Behältnisinneren auf den Kolben geführt werden kann. Vorteilhaft weist der besagte Kolben den gleichen Querschnitt auf wie die Reckstange, so dass bei der Beaufschlagung mit dem gleichen Innendruck des Behältnisses ein Kräftegleichgewicht entsteht.

Die mit dem Druck beaufschlagte Kolbenfläche ist dabei vorteilhaft der Fläche der Reckstange bzw. der unteren Fläche abgewandt, damit auf diese Weise eine Aufhebung der Kräfte besonders effizient erfolgt.

Es wäre jedoch auch denkbar, unterschiedliche Kolbenquerschnitte einzusetzen oder mit unterschiedlichen Drücken zu arbeiten. Auf diese Weise können sich Kräfte ergeben, die etwas niedriger oder höher sind als die auf die Reckstange einwirkende Kraft. Bevorzugt sind jedoch, wie oben erwähnt, die Querschnitte identisch, so dass ohne aufwendige Maßnahmen mit dem gleichen Druck die gleiche Gegenkraft entsteht. Der Druck, der auf die Reckstange wirkt, lässt sich einfach abgreifen und auf den Kolben leiten, der die Gegenkraft erzeugt. Vorteilhaft ist an oder in der besagten Verbindungsleitung, welche die Druckluft auf den Kolben führt, eine Ventileinrichtung vorgesehen, so dass nur zeitweise die Gegenkraft erzeugt wird, beispielsweise während der Rückwärtsbewegung der Reckstange.

Bei einer bevorzugten Ausführungsform weist eine entsprechende Vorrichtung eine Vielzahl von Blasstationen auf bzw. eine Vielzahl von Vorrichtungen zum Expandieren von Kunststoffvorformlingen zu Kunststoffbehältnissen. Dabei ist es möglich, dass die erwähnten Kolben zur Erzeugung der Gegenkraft aller Stationen auf einer Ringleitung zusammengefasst werden. Diese Ringleitung kann über Druckregler auf einem spezifizierten Druckniveau gehalten werden. So ist es möglich, dass beispielsweise die Reckstange in einem ausgefahrenen Zustand ausbalanciert ist. Fährt eine der Reckstangen ein, dann wird gleichzeitig an einer anderen Station die Reckstange ausgefahren, wobei durch das Verschieben der Luft der Reckvorgang unterstützt wird.

Auf diese Weise kann durch die Bewegung einer Reckstange die Bewegung einer weiteren Reckstange gefördert werden. Der Vorteil dieser Ausführungsform ist das geringere Totraumvolumen, da keine neue Luft zugeführt werden muss wodurch wiederum der Energieverbrauch sinkt. Andererseits muss beim gleichzeitigen Einfahren aller Reckstangen ein Luftpolster überwunden werden wodurch die Reckstangen an der oberen Stelle nicht mehr ausbalanciert sind und so ggfs. fixiert werden müssen.

Bei einer weiteren vorteilhaften Ausführungsform wirkt die Kraftkompensationseinrichtung derart, dass vor der Endlage der Reckstange d. h. derjenigen Situation, bei der die Reckstange nahezu zurückgezogen ist nur mit einer bestimmten Beschleunigung beispielsweise einer "Beschleunigung" von maximal -1g (Verzögerung) gebremst wird. Diese Verzögerungskraft kann dabei durch das Eigengewicht des Reckschlittens hervorgerufen werden. Auch wäre es möglich, den Elektromotor kurz vor der Verzögerung auszuschalten wobei dann bevorzugt der Reckzylinder auf ein mechanisches Dämpfungssystem auffährt. Grundsätzlich wäre es möglich, diese Erfindung mit allen Varianten von elektrischen Recksystemen einzusetzen, z. B. Linearmotoren, Spindeln, Spindelmuttern, Riemen und Getrieben.

Die Vorteile der hier beschriebenen Vorrichtung liegen darin, dass ein ausbalancierter Zustand des Reckzylinders an allen Positionen erreicht wird und dieser insbesondere auch unabhängig von dem Druck in dem Vorformling bzw. der Kunststoffflasche ist. Auf diese Weise entsteht in dem Servomotor eine geringere Verlustleistung und es ist auch eine kleinere Auslegung des Servomotors möglich.

Bei einer weiteren Ausführungsform weist die Vorrichtung eine Druckzuführungsleitung auf und diese Druckzuführungsleitung ist vorteilhaft mit mehreren Druckluftzuführungsleitungen in einer Ringleitung zusammengeführt. Besonders bevorzugt weist die Ringleitung eine Druckregelung auf.

So ist vorzugsweise diese Druckzuführungsleitung an die Kolbenelemente gekoppelt bzw. steht in Strömungsverbindung mit diesen. Genauer gesagt kann eine Anlage zur Umformung von Kunststoffvorformlingen zu Kunststoffbehältnissen eine Vielzahl von Vorrichtungen der oben beschriebenen Art aufweisen und diese einzelnen Vorrichtungen können jeweils die genannten Druckzuführungsleitungen aufweisen.

Die vorliegende Erfindung ist weiterhin auf ein Verfahren zum Expandieren von Kunststoffvorformlingen zu Kunststoffbehältnissen gerichtet. Dabei werden die Kunststoffvorformlinge innerhalb einer Blasform zu den Kunststoffbehältnissen expandiert und dabei wird den Kunststoffvorformlingen mit einer Zuführeinrichtung ein gasförmiges Medium zu deren Expansion zugeführt und die Kunststoffvorformlinge werden mit einer Reckstange entlang deren Längsrichtung gedehnt. Dabei ist ein Antriebsmotor in Form eines Elektromotors vorgesehen, der eine Vorwärtsbewegung der Reckstange in der Längsrichtung zum Dehnen des Kunststoffvorformlings erzeugt.

Dabei wird eine durch den Innendruck des Gases in dem Behältnis erzeugte auf den Elektromotor wirkende Kraft wenigstens teilweise und wenigstens zeitweise durch eine zusätzlich zu dem Elektromotor wirkende Kraftkompensationseinrichtung kompensiert. Bevorzugt entlastet diese Kraftkompensationseinrichtung den Elektromotor bzw. reduziert insbesondere während einer Rückwärtsbewegung der Reckstange die auf den Elektromotor wirkenden Kräfte. Vorteilhaft wird auf diese Weise vermieden, dass der Elektromotor in einen (wärmeerzeugenden) generatorischen Betrieb übergeht.

Weitere Vorteile und Ausführungsformen ergeben sich aus den beigefügten Zeichnungen: Darin zeigen:
Fig. 1 eine schematische Ansicht einer erfindungsgemäßen Anlage zum Expandieren vonKunststoffbehältnissen;
Fig. 2 eine Seitenansicht einer Vorrichtung zum Expandieren von Kunststoffbehältnissen nach dem Stand der Technik;
Fig. 3a und 3b zwei Prinzipzeichnungen zum Veranschaulichen einer erfindungsgemäßen Vorrichtung;
Fig. 4a und 4b zwei detailliertere Darstellungen zur Veranschaulichung einer erfindungsgemäßen Vorrichtung;
Fig. 5a und 5b zwei Darstellungen einer Ausführungsform einer erfindungsgemäßen Vorrichtung.

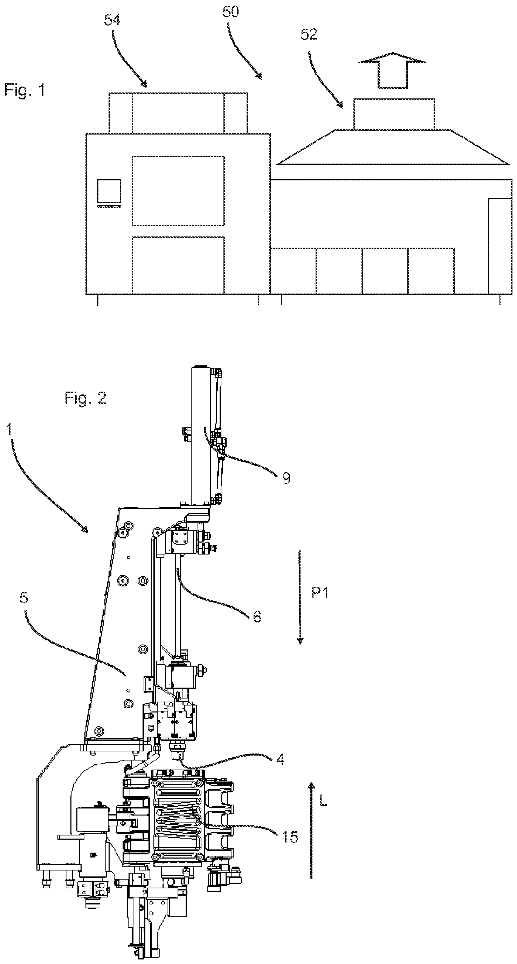

Fig. 1 zeigt eine grob schematische Darstellung einer erfindungsgemäßen Anlage zum Expandieren von Kunststoffvorformlingen zu Kunststoffbehältnissen. Dabei kennzeichnet das Bezugszeichen 52 eine Heizeinrichtung, wie einen Ofen, welche die Kunststoffvorformlinge durchlaufen und welche die Kunststoffvorformlinge erwärmt. Anschließend werden die Kunststoffvorformlinge an die eigentliche Blasanlage 54 übergeben, welche eine Vielzahl von Vorrichtungen aufweist, welche die Kunststoffvorformlinge zu Kunststoffbehältnissen expandieren. Dabei werden die Kunststoffvorformlinge vereinzelt geführt. Daher ist auch eine Transporteinrichtung vorgesehen, welche die Kunststoffvorformlinge durch die Blasanlage 54 fördert. Insbesondere kann dabei ein so genanntes Blasrad vorgesehen sein, an dem eine Vielzahl von Blasstationen angeordnet ist, wobei diese Blasstationen sich daher auf einer kreisförmigen Bahn bewegen. Diese Bewegung kann dabei kontinuierlich oder auch bevorzugt getaktet erfolgen.

Fig. 2 zeigt eine Seitenansicht einer Vorrichtung 1 nach dem Stand der Technik zum Umformen von Kunststoffvorformlingen zu Kunststoffbehältnissen. Diese Vorrichtung weist dabei Formträger 15 auf, in deren Inneren (nicht gezeigt) eine Blasform angeordnet ist. Diese Blasform bildet einen Hohlraum aus, innerhalb dessen die Kunststoffvorformlinge mit Druckluft beaufschlagt werden, um auf diese Weise expandiert zu werden.

Das Bezugszeichen 4 kennzeichnet eine Zuführeinrichtung wie eine Blasdüse, um den Kunststoffvorformlingen die Druckluft zuzuführen. Das Bezugszeichen 6 kennzeichnet eine Reckstange, die sich jedenfalls in der Längsrichtung L des Behältnisses bewegt, um während des Expansionsvorgangs Kunststoffvorformlinge in ihrer Längsrichtung zu dehnen. Der Antrieb dieser Reckstange 6 kann dabei beispielsweise über einen Antrieb 9, hier einen pneumatischen Antrieb, erfolgen. Das Bezugszeichen 5 kennzeichnet einen Träger, an dem die Reckstangenanordnung angeordnet ist.

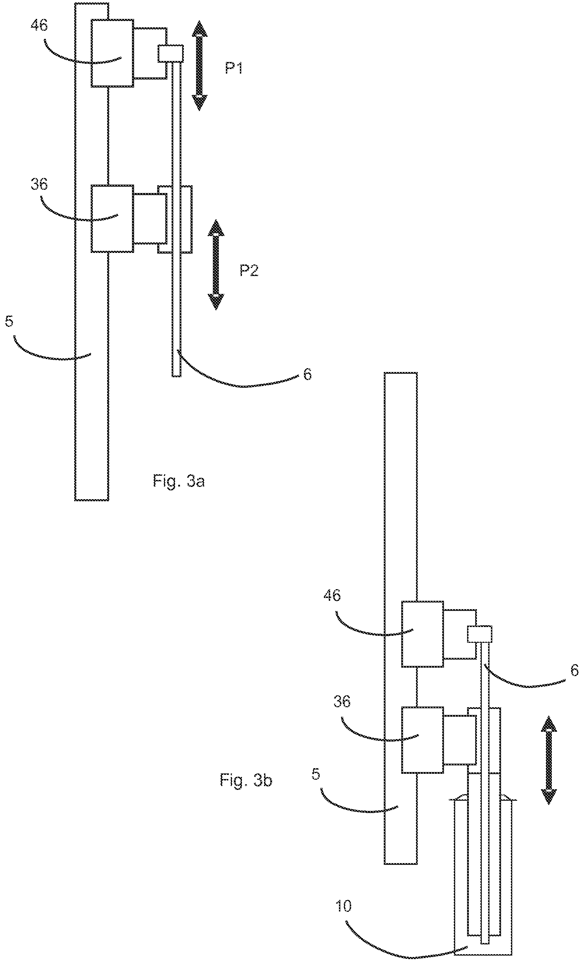

Die Fig. 3a und 3b zeigen den Betrieb einer derartigen Vorrichtung. Dabei bezieht sich das Bezugszeichen 46 auf einen Reckschlitten, an dem die Reckstange 6 angeordnet ist. Das Bezugszeichen 36 kennzeichnet einen Blasschlitten, der (vgl. Fig. 3b) während des Expansionsvorgangs die Blasdüse an das Behältnis 10 heranfährt.

Man erkennt, dass sich hier die beiden Schlitten 36 und 46 entlang der Pfeile P1 und P2 bewegen. So zeigt Fig. 3a eine Darstellung, bei der die Reckstange nicht in das Behältnis eingefahren ist und Fig. 3b eine Darstellung, bei der die Reckstange in das Behältnis eingefahren ist.

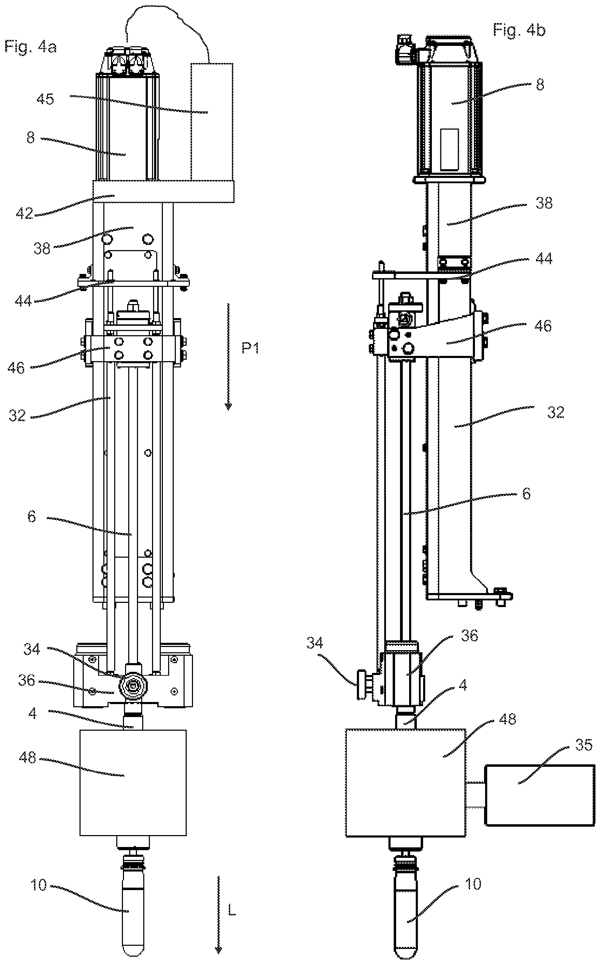

Die Figuren 4a und 4b zeigen detailliertere Darstellungen einer erfindungsgemäßen Vorrichtung zum Expandieren von Kunststoffbehältnissen. Dabei bezieht sich das Bezugszeichen 8 auf einen Elektromotor, der von einer Steuerung 45 gesteuert ist, und der zum Bewegen der Reckstange 6 dient. Das Bezugszeichen 42 kennzeichnet einen Kühlkörper, der zum Kühlen des Elektromotors 8 und der Steuerung 45 dient und das Bezugszeichen 38 kennzeichnet einen Lagerbock. Ein Reckschlitten 46 kann sich hier entlang des Pfeils P1 bewegen, wobei seine Bewegung nach oben hin durch einen Anschlag 44 begrenzt ist. Das Bezugszeichen 32 kennzeichnet einen Mitnehmer zum Mitnehmen eines Blasschlittens 36. Dieser Blasschlitten 36 wird dabei hier über eine Führungsrolle 34 und eine (nicht gezeigte) Führungskurve bewegt.

Das Bezugszeichen 4 kennzeichnet wiederum (teilweise gezeigt), einen Blaskolben bzw. eine Blasdüse die zum Expandieren der Kunststoffbehältnisse 10 dient. Das Bezugszeichen 48 kennzeichnet den Ventilblock, über den die Druckluftzufuhr in die Behältnisse gesteuert wird. Zur Schallreduzierung dient ein Schalldämpfer 35 (vgl. Fig. 4b).

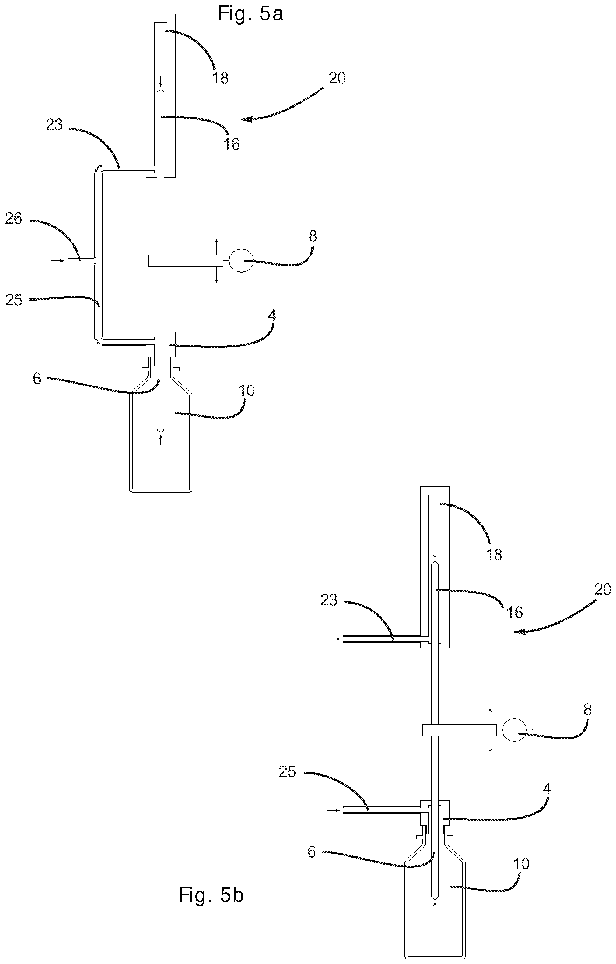

Die Fig. 5a zeigt eine weitere Ausführungsform einer erfindungsgemäßen Vorrichtung. Auch hier ist ein Servomotor 8 vorgesehen, der die Bewegung einer Reckstange 6 in ein Behältnis 10 hinein und aus diesem heraus verursacht. Weiterhin ist hier auch die Blasdüse 4 erkennbar, welche den Kunststoffvorformling mit der Blasluft beaufschlagt. Als Kraftkompensationseinrichtung ist hier ein Kolben 16 vorgesehen, der sich mit der Reckstange 6 bewegt und der dabei gegenüber einer Kolbenaufnahme 18 verschiebbar ist. Auch diese Kolbenaufnahme 18 wird während des Blasvorgangs mit dem Blasdruck beaufschlagt und bewirkt bei der Expansion des Behältnisses, dass die Bewegung der Reckstange nach unten verstärkt wird. Sobald das Behältnis vollständig gedehnt ist, jedoch sich in seinem Inneren auch Druck aufgebaut hat, würde die Reckstange 6 durch diesen Druck nach oben gedrückt werden. Gleichzeitig hat sich jedoch auch in der Kolbenaufnahme 18 ein Druck gebildet, der dem erstgenannten Druck entgegen wirkt. Wenn das untere Ende der Reckstange 6 und das obere Ende des Kolben 16 den gleichen Querschnitt aufweisen, heben sich auch diese Drücke gegenseitig auf. Über die Druckluftzuführungsleitung 26 wird einerseits über den Leitungsabschnitt 23 Kolbenaufnahme 18 mit Druckluft versorgt und auch über den Leitungsabschnitt 25 das Behältnis 10. Bei der in Fig. 5b gezeigten Ausführungsform wäre auch eine getrennte Ansteuerung der Kolbenaufnahme 18 und des Behältnisses 10 möglich. Der Kolben 16, die Kolbenaufnahme 18 und die Druckzuführungsleitung 23 bilden hier die Kraftkompensationseinrichtung 20.

### Bezugszeichenliste

- 1: Vorrichtung
- 4: Zuführeinrichtung, Blaskolben
- 5: Träger
- 6: Reckstange
- 8: Elektromotor, Servomotor
- 9: pneumatischer Antrieb (Stand der Technik)
- 10: Behältnis

- 15: Formträger
- 16: Kolben
- 18: Kolbenaufnahme
- 20: Kraftkompensationseinrichtung

- 23, 25: Leitungsabschnitt
- 26: Druckluftzuführungsleitung
- 32: Mitnehmer
- 34: Führungsrolle
- 35: Schalldämpfer
- 36: Blasschlitten
- 38: Lagerbock
- 43, 42: Kühlkörper
- 44: Anschlag
- 45: Steuerung
- 46: Reckschlitten
- 48: Ventilblock
- 52: Heizeinrichtung
- 54: Blasanlage
- L: Längsrichtung
- P1, P2: Pfeile

## Patentansprüche

1. Vorrichtung (1) zum Expandieren von Kunststoffvorformlingen (10) zu Kunststoffbehältnissen, mit einer Blasform, innerhalb derer die Kunststoffvorformlinge (10) zu den Kunststoffbehältnissen expandierbar sind, mit einer Zuführeinrichtung (4), um den Kunststoffvorformlingen (10) ein gasförmiges Medium zu deren Expansion zuzuführen, mit einer Reckstange (6), um die Kunststoffvorformlinge (10) entlang deren Längsrichtung (L) zu dehnen, wobei ein Antriebsmotor (8) in Form eines Elektromotors (8) vorgesehen ist, der eine Vorwärtsbewegung der Reckstange (6) in deren Längsrichtung (L) zum Dehnen des Kunststoffvorformlings (10) erzeugt,
wobei
die Vorrichtung (1) zusätzlich zu dem Elektromotor (8) eine Kraftkompensationseinrichtung (20) aufweist, welche eine durch einen Innendruck des Gases in dem Behältnis erzeugte auf den Elektromotor (8) wirkende Kraft wenigstens teilweise und wenigstens zeitweise kompensiert,
**dadurch gekennzeichnet, dass**
die durch den Blasdruck auf die Reckstange aufgebrachte Gegenkraft zumindest teilweise derart kompensiert wird, dass der Elektromotor beim eigentlichen Reckvorgang nur noch die eigentliche Reckkraft aufbringen muss, wobei eine Kompensationskraft in der Richtung der Expansionsbewegung der Reckstange wirkt, und weiter wobei die Kraftkompensationseinrichtung (20) ein mit der Reckstange (6) gekoppeltes Kolbenelement (16) aufweist, welches sich gegenüber einer Kolbenaufnahme (18) bewegt, wodurch das oben erwähnte mit der Reckstange (6) verbundene Kolbenelement (16) durch einen Blasdruck beaufschlagbar ist, wobei zudem eine Verbindungsleitung vorgesehen ist, welche einen Innenraum des Kunststoffbehältnisses (10) mit einer entsprechenden Kolbenaufnahme verbindet, so dass der Blasdruck im Behältnisinneren auf das Kolbenelement (16) führbar ist.

2. Vorrichtung (1) nach Anspruch 1,
**dadurch gekennzeichnet, dass**
bei einer Rückwärtsbewegung der Reckstange (6) ein generatorischer Betrieb des Elektromotors (8) verhindert ist.

3. Vorrichtung (1) nach wenigstens einem der vorangegangenen Ansprüche,
**dadurch gekennzeichnet, dass**
die Vorrichtung (1) einen Gewindespindelantrieb oder Linearmotor zum Bewegen der Reckstange (6) aufweist.

4. Vorrichtung (1) nach wenigstens einem der vorangegangenen Ansprüche,
**dadurch gekennzeichnet, dass**
die Kraftkompensationseinrichtung (20) eine pneumatisch arbeitende Kraftkompensationseinrichtung ist.

5. Vorrichtung (1) nach Anspruch 4,
**dadurch gekennzeichnet, dass**
die Kraftkompensationseinrichtung (20) den Innendruck innerhalb des Behältnisses zur Kraftkompensation nutzt.

6. Vorrichtung (1) nach zumindest einem der vorhergehenden Ansprüche,
**dadurch gekennzeichnet, dass** die Vorrichtung (1) eine Druckluftzuführungsleitung (26) aufweist, welche vorzugsweise mit weiteren Druckzuführungsleitungen in einer Ringleitung zusammengeführt ist, wobei besonders bevorzugt die Ringleitung eine Druckregelung aufweist.

7. Verfahren zum Expandieren von Kunststoffvorformlingen (10) zu Kunststoffbehältnissen, wobei die Kunststoffvorformlinge (10) innerhalb einer Blasform zu den Kunststoffbehältnissen expandiert werden und dabei den Kunststoffvorformlingen (10) mit einer Zuführeinrichtung (4) ein gasförmiges Medium zu deren Expansion zugeführt wird und die Kunststoffvorformlinge (10) mit einer Reckstange (6) entlang deren Längsrichtung (L) gedehnt werden, wobei ein Antriebsmotor (8) in Form eines Elektromotors (8) vorgesehen ist, der eine Vorwärtsbewegung der Reckstange (6) in deren Längsrichtung (L) zum Dehnen des Kunststoffvorformlings (10) erzeugt,
wobei
eine durch einen Innendruck des Gases in dem Behältnis erzeugte auf den Elektromotor (8) wirkende Kraft wenigstens teilweise und wenigstens zeitweise durch eine zusätzlich zu dem Elektromotor (8) wirkende Kraftkompensationseinrichtung (20) kompensiert wird,
**dadurch gekennzeichnet, dass**
die durch den Blasdruck auf die Reckstange aufgebrachte Gegenkraft zumindest teilweise derart kompensiert wird, dass der Elektromotor beim eigentlichen Reckvorgang nur noch die eigentliche Reckkraft aufbringen muss, wobei eine Kompensationskraft in der Richtung der Expansionsbewegung der Reckstange wirkt, oder durch die Kraftkompensationseinrichtung (20) die Kompensationskraft während eines vollständigen ausgefahrenen Zustands der Reckstange und auch während der Rückwärtsbewegung der Reckstange wirkt, wobei die Kraftkompensationseinrichtung (20) ein mit der Reckstange (6) gekoppeltes Kolbenelement (16) aufweist, welches sich gegenüber einer Kolbenaufnahme (18) bewegt, wodurch das oben erwähnte mit der Reckstange (6) verbundene Kolbenelement (16) durch einen Blasdruck beaufschlagt wird, wobei zudem eine Verbindungsleitung vorgesehen ist, welche einen Innenraum des Kunststoffbehältnisses (10) mit einer entsprechenden Kolbenaufnahme verbindet, so dass der Blasdruck im Behältnisinneren auf das Kolbenelement (16) geführt wird.

## Claims

1. An apparatus (1) for expanding plastic preforms (10) into plastic containers, comprising a blow mould, within which the plastic preforms (10) can be expanded into plastic containers, a feeder unit (4), in order to feed a gaseous medium to the plastic preforms (10) for the expansion thereof, a stretching rod (6), in order to stretch the plastic preforms (10) along the longitudinal direction (L) thereof, with a drive motor (8) in the form of an electric motor (8) being provided, which drive motor generates a forward movement of the stretching rod (6) in the longitudinal direction (L) thereof for stretching the plastic preform (10), wherein
the apparatus (1) includes, in addition to the electric motor (8), a force compensating device (20), which at least partially and at least temporarily compensates a force that acts on the electric motor (8) and that is generated by an internal pressure of the gas in the container,
**characterized in that**
the counterforce applied to the stretching rod by the blowing pressure is at least partially compensated in such a way that the electric motor only has to apply the actual stretching force during the initial stretching operation, wherein a compensating force acts in the direction of expansion movement of the stretching rod and further wherein the force compensating device (20) includes a piston element (16) coupled to the stretching rod (6), which piston element moves relative to a piston seat (18), whereby the above-mentioned piston element (16) connected to the stretching rod (6) can be acted upon by a blowing pressure, wherein, in addition, a connection line is provided which connects an interior space of the plastic container (10) with a corresponding piston receptacle, so that the blowing pressure in the container interior can be guided onto the piston element (16).

2. The apparatus (1) as claimed in claim 1,
**characterized in that**
a generator operation of the electric motor (8) during a return movement of the stretching rod (6) is prevented.

3. The apparatus (1) as claimed in at least one of the preceding claims,
**characterized in that**
the apparatus (1) has a lead screw drive or a linear motor for moving the stretching rod (6).

4. The apparatus (1) as claimed in at least one of the preceding claims,
**characterized in that**
the force compensating device (20) is a pneumatically operating force compensating device.

5. The apparatus (1) as claimed in claim 4,
**characterized in that**
the force compensating device (20) utilises the internal pressure within the container for force compensation.

6. The apparatus (1) as claimed in at least one of the preceding claims,
**characterized in that**
the device (1) includes a pressurised air supply line (26) that is preferably combined with further pressure supply lines in a ring line, said ring line particularly preferably including a pressure control.

7. A method for expanding plastic preforms (10) into plastic containers, wherein the plastic preforms (10) are expanded into plastic containers within a blow form and a gaseous medium is fed to the plastic preforms (10) for the expansion thereof by means of a feeder unit (4) and the plastic preforms (10) are stretched in the longitudinal direction (L) thereof by means of a stretching rod (6), with a drive motor (8) in the form of an electric motor (8) being provided which generates a forward movement of the stretching rod (6) in the longitudinal direction (L) thereof for stretching the plastic preform (10),
wherein
a force acting on the electric motor (8) by an internal pressure of the gas in the container is at least partially and at least temporarily compensated by means of a force compensating device (20) acting in addition to the electric motor (8),
**characterized in that**
the counterforce applied to the stretching rod by the blowing pressure is at least partially compensated in such a way that the electric motor only has to apply the actual stretching force during the initial stretching operation, wherein a compensating force acts in the direction of expansion movement of the stretching rod or by the force compensating means (20), the compensating force acts during a fully extended state of the stretching rod and also during the backward movement of the stretching rod, wherein the force compensating device (20) includes a piston element (16) coupled to the stretching rod (6), which piston element moves relative to a piston seat (18), whereby the above-mentioned piston element (16) connected to the stretching rod (6) is acted upon by a blowing pressure wherein, in addition, a connecting line is provided which connects an interior space of the plastic container (10) with a corresponding piston receptacle, so that the blowing pressure in the container interior is guided onto the piston element (16).

## Revendications

1. Dispositif (1) d'expansion de préformes en plastique (10) en récipients en plastique, avec un moule de soufflage, à l'intérieur duquel les préformes en plastique (10) peuvent être expansées en les récipients en plastique, avec un dispositif d'amenée (4), pour amener un milieu gazeux aux préformes en plastique (10) pour leur expansion, avec une tige d'étirage (6), pour dilater les préformes en plastique (10) le long de leur direction longitudinale (L), dans lequel est prévu un moteur d'entraînement (8) sous forme de moteur électrique (8), qui génère un mouvement avant de la tige d'étirage (6) dans sa direction longitudinale (L) pour la dilatation de la préforme en plastique (10), dans lequel
le dispositif (1) présente en plus du moteur électrique (8) un dispositif de compensation de force (20), lequel compense au moins en partie et au moins temporairement une force agissant sur le moteur électrique (8) générée par une pression intérieure du gaz dans le récipient, **caractérisé en ce que**
la contre-force appliquée par la pression de soufflage sur la tige d'étirage est compensée au moins en partie de sorte que le moteur électrique ne doit plus appliquer que la force d'étirage proprement dite lors de l'opération d'étirage proprement dite, dans lequel une force de compensation agit dans la direction du mouvement d'expansion de la tige d'étirage, et en outre dans lequel le dispositif de compensation de force (20) présente un élément de piston (16) couplé à la tige d'étirage (6), lequel se déplace par rapport à un logement de piston (18), moyennant quoi l'élément de piston (16) susmentionné relié à tige d'étirage (6) peut être sollicité par une pression de soufflage, dans lequel une conduite de raccordement est prévue en plus, laquelle relie un espace intérieur du récipient en plastique (10) à un logement de piston correspondant, de sorte que la pression de soufflage puisse être guidée à l'intérieur du récipient sur l'élément de piston (16).

2. Dispositif (1) selon la revendication 1,
**caractérisé en ce que**
un fonctionnement en tant que générateur du moteur électrique (8) est empêché lors d'un mouvement arrière de la tige d'étirage (6).

3. Dispositif (1) selon au moins l'une quelconque des revendications précédentes,
**caractérisé en ce que**
le dispositif (1) présente un entraînement de broche filetée ou moteur linéaire pour le déplacement de la tige d'étirage (6).

4. Dispositif (1) selon au moins l'une quelconque des revendications précédentes,
**caractérisé en ce que**
le dispositif de compensation de force (20) est un dispositif de compensation de force à fonctionnement pneumatique.

5. Dispositif (1) selon la revendication 4,
**caractérisé en ce que**
le dispositif de compensation de force (20) utilise la pression intérieure à l'intérieur du récipient pour la compensation de force.

6. Dispositif (1) selon au moins l'une quelconque des revendications précédentes,
**caractérisé en ce que** le dispositif (1) présente une conduite d'amenée d'air comprimé (26), laquelle est réunie de préférence avec d'autres conduites d'amenée de pression dans une conduite annulaire, dans lequel de manière particulièrement préférée, la conduite annulaire présente une régulation de pression.

7. Procédé d'expansion de préformes en plastique (10) en récipients en plastique, dans lequel les préformes en plastique (10) sont expansées à l'intérieur d'un moule de soufflage en les récipients en plastique et ce faisant un milieu gazeux est amené aux préformes en plastique (10) avec un dispositif d'amenée (4) pour leur expansion et les préformes en plastique (10) sont dilatées avec une tige d'étirage (6) le long de leur direction longitudinale (L), dans lequel est prévu un moteur d'entraînement (8) sous forme de moteur électrique (8), qui génère un mouvement avant de la tige d'étirage (6) dans sa direction longitudinale (L) pour la dilatation de la préforme en plastique (10), dans lequel
une force agissant sur le moteur électrique (8) générée par une pression intérieure du gaz dans le récipient est compensée au moins en partie et au moins temporairement par un dispositif de compensation de force (20) agissant en plus du moteur électrique (8),
**caractérisé en ce que**
la contre-force appliquée par la pression de soufflage sur la tige d'étirage est compensée au moins en partie de sorte que le moteur électrique ne doit plus appliquer que la force d'étirage proprement dite lors de l'opération d'étirage proprement dite, dans lequel une force de compensation agit dans la direction du mouvement d'expansion de la tige d'étirage, ou la force de compensation agit grâce au dispositif de compensation de force (20) pendant un état complètement déployé de la tige d'étirage et également pendant le mouvement arrière de la tige d'étirage, dans lequel le dispositif de compensation de force (20) présente un élément de piston (16) couplé à la tige d'étirage (6), lequel se déplace par rapport à un logement de piston (18), moyennant quoi l'élément de piston (16) susmentionné relié à tige d'étirage (6) est sollicité par une pression de soufflage, dans lequel une conduite de raccordement est prévue en plus, laquelle relie un espace intérieur du récipient en plastique (10) à un logement de piston correspondant, de sorte que la pression de soufflage soit guidée à l'intérieur du récipient sur l'élément de piston (16).
